# EUROPÄISCHE PATENTSCHRIFT

(11) **EP 2 548 722 B1**
(45) Veröffentlichungstag und Bekanntmachung des Hinweises auf die Patenterteilung: **02.03.2016**
(21) Anmeldenummer: 12171567.6
(22) Anmeldetag: 12.06.2012
(51) Int. Cl.: B29D 30/72

(54) **Verfahren zum Aufbringen eines Labels auf die Seitenwand eines Fahrzeugreifens**
Method for attaching a label to the sidewall of a vehicle tyre
Procédés d'application d'un label sur le flanc d'un pneu de véhicule

(30) Priorität: 18.07.2011 DE 102011051893
(43) Veröffentlichungstag der Anmeldung: 23.01.2013
(73) Patentinhaber: Continental Reifen Deutschland GmbH, 30165 Hannover (DE)
(72) Erfinder: Gerhardt, Joachim, 30890 Barsinghausen (DE)
(74) Vertreter: Finger, Karsten

(56) Entgegenhaltungen:
- EP-A1- 1 625 952
- DE-A1- 4 330 700
- US-A- 5 047 110
- US-A- 6 001 459

## Beschreibung

Die Erfindung betrifft ein Verfahren zum Aufbringen eines Labels auf die Seitenwand eines Fahrzeugreifens.

Die Seitenwand von Fahrzeugreifen weist Bezeichnungen auf. Diese Bezeichnungen sollen von hoher Fertigungsqualität sein, eine hohe Qualitätsanmutung des Reifens erzeugen sowie diesen gegenüber anderen Reifen optisch hervorheben.

Dieses wird z.B. durch das Aufbringen von Labels in Form von Vulkanetten auf die Reifenseitenwand erreicht. Als Werkstoffe der Vulkanetten kommen beispielsweise Elastomere, thermoplastische Elastomere, Kunststoffe oder Kombinationen im schichtweisen Aufbau aus Elastomeren und bedruckten Kunststoffen in Frage. Den gestanzten Vulkanetten kommt eine herausragende Bedeutung zu. Vulkanetten zeichnen sich dadurch aus, dass diese auf den unvulkanisierten Reifenrohling aufgebracht werden und während der Vulkanisation mit diesem zusammen unter Druck- und Wärmeeinfluß vernetzen bzw. aushärten.

Aus der EP-A-1 625 952 ist es bekannt, die Reifenseitenwand mit Vulkanetten zu versehen. Die Vulkanetten weisen eine Stärke von etwa 1 mm auf und sind durch auf die Seitenwand des Reifens vulkanisierte Gummifolien gebildet. Der Folienstärkebereich bewegt sich zumeist zwischen 0,1 und 1,5 mm. Die Vulkanetten werden durch Einwirkung von Druck und Wärme auf den zu kennzeichnenden Reifenrohling gepresst und härten oder vulkanisieren an bzw. auf dem Reifen aus. Die Vulkanetten tragen in der Regel farbige, aufgedruckte Schriften, Zeichen, Logos, technische Informationen, Markennamen oder dergleichen.

Aus der US 6001459 ist es bekannt, die Reifenseitenwand mit einer Vulkanette in Funktion eines Haftgrundes zu versehen. Der Reifenrohling wird mit der darauf angeordneten Vulkanette vulkanisiert. Die Vulkanette wird sodann mit Bezeichnungen in Form von sublimierten Farben-Tinten ausgestattet.

Aus der EP 4330700 A1 ist eine bedruckte Vulkanette bekannt, die mit aciden Bestandteilen zur Neutralisation von in die Vulkanetten diffundierenden basischen Alterungsschutzmitteln versehen ist. Die Vulkanette weist eine vulkanisierbare Haftschicht auf, die zum Schutz vor Verunreinigung und zur besseren Handhabbarkeit der Vulkanette mit einer Trägerfolie versehen ist.

"Bezeichnungen" umfassen dabei Firmennamen, Firmenlogos, Farbkennzeichnungen, Informationsdaten, Identifikationscodes, Schraffuren etc..

Jedoch ist es aus Kostengründen nur praktikabel, Großserien von Reifen mit Vulkanetten zu versehen. Ein kurzfristiges Bestücken oder ein Bestücken von Klein- bis Kleinstserien, wie beispielsweise Reifen einer geringen Stückzahl für Messen oder Shows mit besonderen Bezeichnungen, ist mit dem vorgenannten Verfahren nicht ökonomisch möglich.

Es ist die Aufgabe der Erfindung, ein Verfahren zur Verfügung zu stellen, mit dem Fahrzeugreifen kurzfristig und/ oder Klein- bis Kleinstserien ökonomisch und haltbar mit Labels bestückt werden können.

Gelöst wird die Aufgabe, wie im Anspruch 1 definiert, indem man das Verfahren zur Aufbringung eines Labels auf den Seitenwand eines Fahrzeugreifens mit folgenden Schritten ausführt:
- Anordnung einer blanken Vulkanette in Funktion eines Haftgrundes auf einen Reifenrohling,
- Vulkanisation des Reifenrohlings mit der auf diesem angeordneten Vulkanette zum Fahrzeugreifen,
- Anordnung eines Aufklebers auf der Oberfläche der als Haftgrund fungierenden Vulkanette des Fahrzeugreifens.

Erfindungsgemäß ist vorgesehen, eine schwarze, blanke, unbeschriftete Vulkanette als Haftgrund zusammen mit dem Reifenrohling zu vulkanisieren. Bei Bedarf wird ein Aufkleber als Label auf den fertig vulkanisierten Fahrzeugreifen aufgebracht. Dieser Aufkleber wird auf die Oberfläche der als Haftgrund dienenden Vulkanette aufgeklebt.

Dieser Aufkleber kann zu einem beliebigen Zeitpunkt nach der Vulkanisation des Reifens aufgebracht werden. Der Aufkleber kann auf nur wenigen Reifen von Klein- oder Kleinstserien ökonomisch aufgebracht werden. Das Aufbringen der Aufkleber ist unabhängig von den Produktionschritten des Reifens.

Der Vorteil, eine blanke Vulkanette als Haftgrund für einen nach der Vulkanisation aufzubringenden Aufkleber zu verwenden liegt darin, dass die Oberfläche der Vulkanette für eine haltbare Aufbringung des Aufklebers optimiert ausgeführt ist. Auf der üblichen Reifenseitenwand halten Aufkleber erfahrungsgemäß nur unzureichend.

Der Begriff "blank" meint ohne Beschriftungen, kann aber optional eine uni-bedruckte Oberfläche aufweisen.

Ein "Aufkleber" fällt unter den Begriff "Label".

Die blanke Vulkanette zur Verwendung in dem vorgenannten Verfahren dient als Haftgrund und weist eine Oberfläche auf, auf der der Aufkleber haltbar aufgeklebt werden kann. Vorteilhafterweise besteht die Oberfläche der Vulkanette aus einem üblichen Druck, welcher uni-farben ausgeführt sein kann. Die Druckoberfläche ist sehr glatt und ist u.a daher als Haftgrund sehr geeignet.

## Patentansprüche

1. Verfahren zum Aufbringen eines Labels auf die Seitenwand eines Fahrzeugreifens mit den folgenden Schritten:
- Anordnung einer Vulkanette in Funktion eines Haftgrundes auf einen Reifenrohling
- Vulkanisation des Reifenrohlings mit der auf diesem angeordneten Vulkanette zum Fahrzeugreifen
- Anordnung des Aufklebers auf der Oberfläche der als Haftgrund fungierenden Vulkanette des Fahrzeugreifens.

2. Vulkanette zur Verwendung in dem Verfahren nach Anspruch 1, **dadurch gekennzeichnet, dass** die als Haftgrund dienende Oberfläche der Vulkanette ein Uni-Druck ist.

3. Verwendung einer Vulkanette, welche auf einen Reifenrohling vulkanisierbar ist als Haftgrund für einen auf den vulkanisierten Fahrzeugreifen aufbringbaren Aufkleber.

## Claims

1. Method for attaching a label to the sidewall of a vehicle tyre comprising the following steps:
- arranging a rubber label on a tyre blank to act as an adherend surface
- vulcanizing the tyre blank with the rubber label arranged on it to form the vehicle tyre
- arranging the adhesively attached label on the surface of the rubber label of the vehicle tyre acting as an adherend surface.

2. Rubber label for use in the method according to Claim 1, **characterized in that** the surface of the rubber label serving as an adherend surface is a uniform print.

3. Use of a rubber label that can be vulcanized onto a tyre blank as an adherend surface for an adhesively attached label that can be attached to the vulcanized vehicle tyre.

## Revendications

1. Procédé d'application d'un label sur le flanc latéral d'un pneu de véhicule comprenant les étapes suivantes :
- agencement d'une étiquette en caoutchouc en fonction d'une base adhésive sur une ébauche de pneu,
- vulcanisation de l'ébauche de pneu avec l'étiquette en caoutchouc disposée sur celle-ci pour produire le pneu de véhicule,
- agencement de l'autocollant sur la surface de l'étiquette en caoutchouc du pneu de véhicule servant de base adhésive.

2. Etiquette en caoutchouc pour l'utilisation dans le procédé selon la revendication 1, **caractérisée en ce que** la surface de l'étiquette en caoutchouc servant de base adhésive est un produit imprimé uni.

3. Utilisation d'une étiquette en caoutchouc qui peut être vulcanisée sur une ébauche de pneu en tant que base adhésive pour un autocollant pouvant être appliqué sur le pneu de véhicule vulcanisé.
